# EUROPÄISCHE PATENTANMELDUNG

(11) **EP 4 764 286 A1**
(43) Veröffentlichungstag der Anmeldung: **24.06.2026**
(21) Anmeldenummer: 24222033.3
(22) Anmeldetag: 20.12.2024
(51) Int. Cl.: F16L 37/091

(54) **STECKEINSATZ UND VERFAHREN ZUR HERSTELLUNG EINES STECKEINSATZES**

(71) Anmelder: AVS, Ingenieur J.C. Römer GmbH, 94481 Grafenau (DE)
(72) Erfinder: SAMMER, Alexander, 94481 Grafenau (DE); MUSSACK, Sebastian, 94481 Grafenau (DE); GRILL, Pascal, 94481 Grafenau (DE)
(74) Vertreter: Wolf, Gerhard

(57) **Zusammenfassung**

Die Erfindung betrifft einen Steckeinsatz ausgebildet zur Einbringung in einen Grundkörper (3), wobei der Steckeinsatz (1) zur lösbaren Kopplung eines rohrförmigen Elements (2) mit dem Grundkörper (3) ausgebildet ist, wobei der Steckeinsatz (1) eine Steckhülse (4), ein Fixierelement (5) und ein Löseorgan (6) umfasst, wobei das Fixierelement (5) zur lösbaren Fixierung eines über eine Einführöffnung (E) entlang der Längsachse (LA) des Steckeinsatzes (1) eingeschobenen, rohrförmigen Elements (2) in der Steckhülse (4) ausgebildet ist und das Löseorgan (6) mit dem Fixierelement (5) derart zusammenwirkt, dass durch eine axiale Verschiebung des Löseorgans (6) relativ zur Steckhülse (4) die Fixierung des rohrförmigen Elements (2) gelöst wird, wobei die Steckhülse (4) mehrere verschwenkbare Haltesegmente (4.3) aufweist, mittels denen das Fixierelement (5) in der Steckhülse (4) gesichert ist.

## Beschreibung

Die Erfindung betrifft einen Steckeinsatz sowie ein Verfahren zur Herstellung eines Steckeinsatzes.

Steckeinsätze zur lösbaren Kopplung eines rohrförmigen Elements, beispielsweise eines Schlauchs, mit einem Grundkörper, beispielsweise einem Gehäuse einer Schlauchkupplung, eines Ventils, eines Sensors, einer Pumpe etc. sind bekannt, beispielsweise aus der anmeldereigenen Druckschrift DE 10 2018 121 440 A1.

Der bekannte Steckeinsatz weist eine in axialer Richtung gesehen zweiteilige Steckhülse bestehend aus einer Einpresshülse und einem Stützring, ein in der Steckhülse angeordnetes Fixierelement als Krallenring und ein Löseorgan auf, das mit dem Fixierelement derart zusammenwirkt, dass beim Eindrücken des Löseorgans in die Steckhülse die Krallen des Fixierelements deformiert werden und damit das rohrförmige Element aus dem Grundkörper herausgezogen werden kann.

Ein wesentlicher Nachteil des bekannten Steckeinsatzes besteht darin, dass die Herstellung und das Zusammenfügen der Einzelteile des Steckeinsatzes sehr aufwendig sind. Bislang muss die Steckhülse bzw. deren Einzelteile mittels spanender Bearbeitung hergestellt und anschließend zusammengesetzt werden.

Ausgehend hiervon ist es Aufgabe der Erfindung, einen Steckeinsatz anzugeben, bei dem der Herstellungs- und Montageaufwand reduziert ist, so dass die Herstellungskosten gesenkt werden können.

Die Aufgabe wird durch einen Steckeinsatz mit den Merkmalen des unabhängigen Patentanspruchs 1 gelöst. Bevorzugte Ausführungsformen sind Gegenstand der Unteransprüche. Ein Verfahren zur Herstellung des Steckeinsatzes ist Gegenstand des nebengeordneten Patentanspruchs 13.

Gemäß einem ersten Aspekt wird ein Steckeinsatz offenbart. Der Steckeinsatz ist zur Einbringung in einen Grundkörper und zur lösbaren Kopplung eines rohrförmigen Elements mit dem Grundkörper ausgebildet. Der Steckeinsatz umfasst eine Steckhülse, ein Fixierelement und ein Löseorgan, das als ein das rohrförmige Element umfangsseitig umgebender Lösering ausgebildet sein kann. Das Fixierelement ist zur lösbaren Fixierung eines über eine Einführöffnung eingeschobenen, rohrförmigen Elements in der Steckhülse ausgebildet. Das Löseorgan wirkt mit dem Fixierelement derart zusammen, dass durch eine axiale Verschiebung des Löseorgans relativ zur Steckhülse die Fixierung des rohrförmigen Elements gelöst wird.

Die Steckhülse umfasst einen ersten und einen zweiten Hülsenabschnitt. Der erste Hülsenabschnitt ist zur Aufnahme eines ersten freien Endes des Löseorgans ausgebildet. Der zweite Hülsenabschnitt umfasst mehrere umfangsseitig verteilt angeordnete Haltesegmente. Diese Haltesegmente sind radial in Bezug auf die Längsachse verschwenkbar. Die Haltesegmente geben in einer geöffneten Stellung eine Einschuböffnung für das Fixierelement frei, so dass das Fixierelement von der der Einführöffnung gegenüberliegenden Einschuböffnung in die Steckhülse einsetzbar ist. Die Haltesegmente sind durch ein Verschwenken radial nach innen in eine geschlossene Stellung positionierbar, so dass das Fixierelement in der Steckhülse fixiert ist. Dies bedeutet insbesondere, dass in der geschlossenen Stellung der Haltesegmente das Fixierelement unverlierbar in der Steckhülse gehalten ist. Es ist ein Sicherungselement vorgesehen, das die Haltesegmente, die in die geschlossene Stellung verschwenkt sind, umfangsseitig umgibt. Dadurch wird diese geschlossene Stellung durch das Sicherungselement gesichert.

Der technische Vorteil des Steckeinsatzes besteht darin, dass eine einstückige Steckhülse verwendet wird, die aufgrund der verschwenkbaren Haltesegmente dazu ausgebildet ist, dass in einer geöffneten Stellung der Haltesegmente das Fixierelement in die Steckhülse einsetzbar ist und dass dieses Fixierelement durch Positionieren der Haltesegmente in die geschlossene Stellung fixiert wird. Dadurch wird der Aufwand zur Herstellung des Steckeinsatzes wesentlich reduziert, da der Steckeinsatz weniger Bauteile aufweist, der Herstellungs- und Montageprozess damit vereinfacht ist und dadurch die Kosten für die Herstellung des Steckeinsatzes reduziert werden können.

Gemäß einem Ausführungsbeispiel weisen zumindest einige der Haltesegmente außenseitig eine Einkerbung oder eine Hinterschneidung auf, in die das Sicherungselement mit dessen inneren Rand oder mit Krallen eingreift. Dadurch wird erreicht, dass sich das Sicherungselement auch bei hohen Drücken, die im rohrförmigen Element übertragen werden, nicht von der Steckhülse lösen kann und damit der Steckeinsatz sicher im Grundkörper fixiert bleibt.

Gemäß einem Ausführungsbeispiel sind jeweils ein Paar von unmittelbar benachbarten Haltesegmenten der Steckhülse in der geöffneten Stellung durch jeweils eine Lücke getrennt. Diese Lücke kann in der geöffneten Stellung dreieckförmig oder zumindest zum ersten Hülsenabschnitt hin zulaufend ausgebildet sein. Die Lücke ist in der geschlossenen Stellung der Haltesegmente zumindest partiell geschlossen und die unmittelbar benachbarten Haltesegmente liegen vorzugsweise zumindest partiell aneinander an. Durch die Lücken zwischen den Haltesegmenten wird ein Freiraum geschaffen, der die Verschwenkung der Haltesegmente radial nach innen ermöglicht. Aufgrund der Anlage der benachbarten Haltesegmente wird der Verschwenkweg der Haltesegmente begrenzt, so dass ein unerwünschtes weiteres Verschwenken der Haltesegmente nach innen , das zu einem Ablösen des Sicherungselements von den Haltesegmenten führen würde, wirksam vermieden werden kann.

Gemäß einem Ausführungsbeispiel bilden die Haltesegmente in der geschlossenen Stellung innenseitig eine trichterförmige Führungsfläche für das rohrförmige Element. Damit kann das einzuschiebende rohrförmige Element durch die Haltesegmente geführt und insbesondere zentriert in ein in Einsteckrichtung gesehen unterhalb des Steckeinsatzes angeordnetes Dichtelement eingeführt werden.

Gemäß einem Ausführungsbeispiel ist das Sicherungselement ein ringartiges Element mit einer Innenöffnung, wobei die Innenöffnung derart dimensioniert ist, dass das Sicherungselement auf die sich in der geschlossenen Stellung befindlichen Haltesegmente aufpressbar ist und das Sicherungselement mit dessen inneren Rand oder mit Krallen in eine umlaufend ausgebildete Nut eingreift, die durch das Aneinanderfügen der Einkerbungen oder Hinterschneidungen der Haltesegmente gebildet wird. Dadurch kann ein unverlierbarer Halt des Sicherungselements auf der Steckhülse erreicht werden.

Gemäß einem Ausführungsbeispiel weist das Sicherungselement außenumfangsseitig ausgebildete Krallen auf, die zur Verankerung des Steckeinsatzes in dem Grundkörper ausgebildet sind. Die Krallen bewirken vorzugsweise Spreizkräfte zwischen der Steckhülse und dem Grundkörper und verhindern damit, dass sich der Steckeinsatz beim Auftreten hoher Drücke im rohrförmigen Element aus dem Grundkörper herauslöst. Durch das Sicherungselement können die Anforderungen an Toleranzen der Steckhülse und des Grundkörpers herabgesetzt werden, da durch die Krallen Durchmesserschwankungen ausgeglichen werden können. Ebenfalls kann durch diese Art von Sicherungselement auf einen Hinterschnitt im Grundkörper, in den der Steckeinsatz einsetzbar ist, verzichtet werden. Zudem bietet diese Art der Verankerung des Steckeinsatzes den Vorteil, dass dieser mit geringeren Einpresskräften in den Grundkörper einsetzbar ist, wodurch die Montage erleichtert und die Materialspannung im Grundkörper reduziert wird.

Gemäß einem Ausführungsbeispiel stehen die Krallen schräg nach außen und nach oben in Richtung des freiendseitigen Randes des ersten Hülsenabschnitts der Steckhülse ab. Durch diese Ausrichtung der Krallen wird eine vorteilhafte Spreizwirkung erreicht.

Gemäß einem Ausführungsbeispiel weist das Sicherungselement eine sich innenseitig verjüngende Form auf, und zwar derart, dass sich der Innendurchmesser des Sicherungselements vom äußeren Rand zum inneren Rand hin reduziert. Durch diese gewölbte Ausbildung des Sicherungselements wird erreicht, dass sich das Sicherungselement mit einem Presswerkzeug, das die Verschwenkung der Haltesegmente bewirkt, gleichzeitig vorteilhaft mit aufpressen lässt und die Wölbung des Sicherungselements die Verschwenkung der Haltesegmente radial nach innen begünstigt.

Gemäß einem Ausführungsbeispiel ist das Sicherungselement dazu ausgebildet, den freiendseitigen Rand der Haltesegmente zu umgreifen. In anderen Worten bildet das Sicherungselement einen Stützkorb, mit einem ersten, einem zweiten und einem dritten Abschnitt, wobei diese Abschnitte aneinander anschließen und damit den Rand, der sich durch die freien Enden der Haltesegmente bildet, umschließen. Dadurch wird eine höhere Formstabilität der verschwenkbaren Haltesegmente erreicht, was insbesondere bei Druckbelastung vorteilhaft ist.

Gemäß einem Ausführungsbeispiel bildet das Sicherungselement mit seinem den freiendseitigen Rand der Haltesegmente umgreifenden Bereich einen Anlageabschnitt für ein Dichtelement. Damit nimmt das Sicherungselement Kräfte, die von dem Dichtelement übertragen werden, auf, so dass diese nicht direkt auf die freien Enden der Haltesegmente wirken.

Gemäß einem Ausführungsbeispiel ist das Fixierelement bei geschlossener Stellung der Halteelemente formschlüssig in der Steckhülse fixiert. Vorzugsweise wird das Fixierelement durch die in der geschlossenen Stellung befindlichen Haltesegmente in axialer Richtung klemmend gehalten. Dadurch kann eine lagegenaue Fixierung und Positionierung des Fixierelements in der Steckhülse erreicht werden.

Gemäß einem Ausführungsbeispiel ist das Fixierelement ein scheibenförmiger Krallenring, der innenumfangsseitig eine Vielzahl von reversibel verbiegbaren Krallen zur Fixierung des rohrförmigen Elements aufweist. Die Krallen weisen ohne ein in den Krallenring eingeschobenes, ringförmiges Element radial oder im Wesentlichen radial nach innen und werden beim Einschieben eines rohrförmigen Elements in den Krallenring in Einschieberichtung verformt, so dass die Krallen freiendseitig in die Wandung des rohrförmigen Elements eingreifen und dadurch ein Herausschieben des rohrförmigen Elements entgegen der Einschieberichtung verhindern.

Gemäß einem Ausführungsbeispiel weist das Fixierelement im Übergangsbereich zwischen einem ringförmigen Abschnitt des Krallenrings und den Krallen eine Wölbung auf, deren konvexe Seite in Richtung der Einführöffnung weist. Die Wölbung kann umlaufend vorgesehen sein. Dadurch kann beim Einschieben des Löseorgans ein Umschnappen des Fixierelements erreicht werden, was vorteilhaft für die Haptik und die Bedienung des Löseorgans ist.

Gemäß einem Ausführungsbeispiel weist das Löseorgan außenseitig Haken auf, die in Ausnehmungen oder eine Hinterschneidung der Steckhülse eingreifen und eine Schiebebewegung des Löseelements vom Fixierelement weg begrenzen. Alternativ kann das Löseorgan Ausnehmungen aufweisen, in die innenumfangsseitig vorgesehene Vorsprünge der Steckhülse eingreifen, um eine Schiebebewegung des Löseorgans vom Fixierelement weg zu begrenzen.

Gemäß einem Ausführungsbeispiel ist die Steckhülse ein einstückiges Kunststoffspritzgussteil. Insbesondere sind auch die Haltesegmente mit angespritzte Abschnitte der Steckhülse. Dadurch kann eine kostengünstige Herstellung der Steckhülse erreicht werden. Zudem bietet eine aus Kunststoff hergestellte Steckhülse Vorteile bei Verwendung des Steckeinsatzes in Bereichen der Lebensmittelindustrie, da die Steckhülse frei von Blei ist und dadurch die Richtlinie 2011/65/EU (RoHS 2) und Verordnung Nr. 1907/2006 (REACH) eingehalten werden können. Weiterhin kann das Gewicht des Steckeinsatzes deutlich reduziert werden, was Vorteile bei der Herstellung, der Lagerung und dem Transport bietet.

Gemäß einem Ausführungsbeispiel weist die Steckhülse im Bereich des freiendseitig vorgesehenen Randes des ersten Hülsenabschnitts eine Schulter auf, die dazu ausgebildet ist, durch Umformen eines Randbereichs des Grundkörpers im Grundkörper übergriffen zu werden. Dadurch kann der Steckeinsatz durch ein randseitiges Übergreifen der Steckhülse im Grundkörper fixiert werden.

Gemäß einem weiteren Aspekt wird ein Verfahren zur Herstellung eines Steckeinsatzes offenbart. Der Steckeinsatz ist zur lösbaren Kopplung eines rohrförmigen Elements mit einem Grundkörper ausgebildet. Der Steckeinsatz umfasst eine Steckhülse, ein Fixierelement und ein Löseorgan. Das Fixierelement ist zur lösbaren Fixierung des rohrförmigen Elements in der Steckhülse ausgebildet. Das Löseorgan wirkt mit dem Fixierelement derart zusammen, dass durch eine axiale Verschiebung des Löseorgans relativ zur Steckhülse die Fixierung des rohrförmigen Elements im Steckeinsatz gelöst wird. Das Verfahren umfasst die folgenden Schritte:
- Bereitstellen einer Steckhülse, eines Fixierelements, eines Sicherungselements und eines Löseorgans, wobei die Steckhülse einen ersten und einen zweiten Hülsenabschnitt aufweist, wobei der erste Hülsenabschnitt zur Aufnahme des ersten freien Endes des Löseorgans ausgebildet ist und wobei der zweite Hülsenabschnitt mehrere umfangsseitig verteilt angeordnete Haltesegmente umfasst, die radial in Bezug auf eine Längsachse der Steckhülse verschwenkbar sind;
- in einer geöffneten Stellung der Haltesegmente, Einsetzen des Fixierelements in die Steckhülse, so dass das Fixierelement in einem Innenraum der Steckhülse aufgenommen ist;
- Verschwenken der Haltesegmente radial nach innen, so dass diese eine geschlossene Stellung einnehmen;
- Aufbringen eines Sicherungselements auf die Haltesegmente, so dass diese vom Sicherungselement umgriffen und in der geschlossenen Stellung gehalten werden; und
- Einfügen des Löseorgans in die Steckhülse.

Der technische Vorteil des Verfahrens besteht darin, dass durch die verschwenkbaren Haltesegmente der Steckhülse eine einfache und kostengünstige Herstellung des Steckeinsatzes möglich wird, da die Haltesegmente in der geöffneten Stellung ein Einsetzen des Fixierelements erlauben und dieses Fixierelement in der geschlossenen Stellung, die durch das Sicherungselement gesichert wird, unverlierbar im Steckeinsatz gehalten wird. Dadurch kann ein mehrteiliger Aufbau der Steckhülse vermieden werden, der eine aufwändige Montage des Steckeinsatzes bedingen würde.

Gemäß einem Ausführungsbeispiel des Verfahrens weisen die Haltesegmente zumindest teilweise außenseitig eine Einkerbung oder eine Hinterschneidung auf. Das Sicherungselement greift mit dem inneren Rand in die Einkerbungen oder die Hinterschneidungen der Haltesegmente ein. Dadurch kann das Sicherungselement verliersicher an der Steckhülse fixiert werden. Insbesondere verhindert die Einkerbung oder die Hinterschneidung, dass sich das Sicherungselement beim Auftreten von hohen Drücken in dem rohrförmigen Element von der Steckhülse löst.

Gemäß einem Ausführungsbeispiel des Verfahrens werden die Haltesegmente mittels eines eine Innenöffnung aufweisenden Presswerkzeugs radial nach innen verschwenkt und gleichzeitig wird das Sicherungselement außenseitig auf die Steckhülse im Bereich der Haltesegmente aufgepresst. Dadurch kann der Herstellungsprozess des Steckeinsatzes weiter optimiert werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft eine Längsschnittdarstellung eines ersten Ausführungsbeispiels eines Steckeinsatzes, der in einen Grundkörper eingesetzt ist und in den ein rohrförmiges Element eingeschoben ist;
- Fig. 2: beispielhaft eine Längsschnittdarstellung des ersten Ausführungsbeispiels eines Steckeinsatzes in Alleinstellung;
- Fig. 3: beispielhaft eine Längsschnitt-Explosionsdarstellung des in den Figuren 1 und 2 gezeigten ersten Ausführungsbeispiels des Steckeinsatzes;
- Fig. 4: beispielhaft eine Schnittdarstellung eines zweiten Ausführungsbeispiels eines Fixierelements, das zur Fixierung des Steckeinsatzes im Grundkörper einsetzbar ist;
- Fig. 5: beispielhaft eine Schnittdarstellung eines dritten Ausführungsbeispiels eines Fixierelements, das zur Fixierung des Steckeinsatzes im Grundkörper einsetzbar ist;
- Fig. 6: beispielhaft eine Längsschnittdarstellung eines zweiten Ausführungsbeispiels eines Steckeinsatzes, der in einen Grundkörper eingesetzt ist;
- Fig. 7: beispielhaft eine Längsschnittdarstellung eines dritten Ausführungsbeispiels eines Steckeinsatzes, der in einen Grundkörper eingesetzt ist;
- Fig. 8: beispielhaft eine Längsschnittdarstellung des vierten Ausführungsbeispiels eines Steckeinsatzes in Alleinstellung;
- Fig. 9: beispielhaft ein viertes Ausführungsbeispiels eines Fixierelements in Alleinstellung, das an dem Steckeinsatz gemäß Fig. 8 vorgesehen ist; und
- Fig. 10: beispielhaft ein Blockdiagramm, das die Schritte eines Verfahrens zur Herstellung eines Steckeinsatzes illustriert.

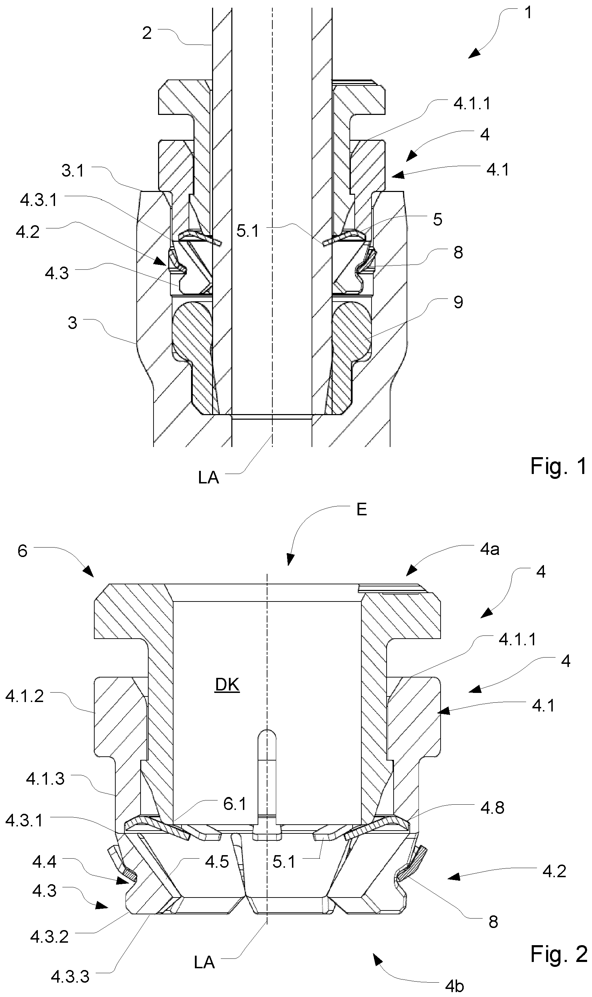

Figuren 1 bis 3 zeigen ein erstes Ausführungsbeispiel eines Steckeinsatzes 1. Der Steckeinsatz 1 dient der lösbaren Fixierung eines rohrförmigen Elements 2 in einem Grundkörpers 3. Das rohrförmige Element 2 kann beispielsweise ein Schlauch oder ein Rohr mit kreisrundem Querschnitt sein. Der Grundkörper 3 kann beispielsweise ein Gehäuse einer Schlauchkupplung, eines Ventils, eines Verteilers, eines Sensors, einer Pumpe etc. sein.

Der Steckeinsatz 1 bildet ein Kopplungsstück zwischen dem rohrförmigen Element 2 und dem Grundkörper 3. Er ist dazu ausgebildet, in eine Öffnung des Grundkörpers 3 eingefügt zu werden. Im Inneren des Steckeinsatzes 1 ist ein Aufnahmeraum ausgebildet, in den ein freies Ende des rohrförmigen Elements 2 einschiebbar und fixierbar ist, so dass durch die Fixierung des Steckeinsatzes 1 im Grundkörper 3 und die Fixierung des rohrförmigen Elements 2 in dem Steckeinsatz 1 das rohrförmige Element 2 im Grundkörper 3 lösbar gehalten wird. Zur Abdichtung des Übergangs zwischen dem rohrförmigen Element 2 und dem Grundkörper 3 ist ein Dichtelement 9 vorgesehen. Das Dichtelement 9 kann, wie in Fig. 1 und 2 gezeigt, als Elastomer-Formteil ausgebildet sein. Alternativ kann das Dichtelement 9 auch ein O-Ring sein.

Der Steckeinsatz 1 umfasst eine Steckhülse 4, ein Fixierelement 5 und ein Löseorgan 6. Die Steckhülse 4 ist hülsenartig ausgebildet und bildet zumindest abschnittsweise die umfangsseitige Wandung des Steckeinsatzes 1 aus. Die Steckhülse 4 weist an einem ersten freien Ende 4a eine Einführöffnung E auf, über die das rohrförmige Element 2 in den Steckeinsatz 1 einführbar ist. An die Einführöffnung E anschließend ist im Inneren der Steckhülse 4 ein Durchführkanal DK gebildet, in den das rohrförmige Element 2 einschiebbar ist.

Im Inneren der Steckhülse 4 ist das Fixierelement 5 aufgenommen. Das Fixierelement 5 ist dazu ausgebildet, das rohrförmige Element 2 in axialer Richtung im Steckeinsatz 1 zu verankern. Im gezeigten Ausführungsbeispiel ist das Fixierelement 5 ein ringartiges Element. Außenumfangsseitig ist das Fixierelement 5 in der Steckhülse 4 durch einen Formschluss fixiert. In der gezeigten Ausführungsform taucht der außenumfangsseitig vorgesehene Randbereich des Fixierelements 5 in eine innenumfangsseitig vorgesehene Ausnehmung der Steckhülse 4 ein, wodurch das Fixierelement 5 in axialer Richtung in der Steckhülse 4 gehalten ist.

Das Fixierelement 5 weist am innenliegenden Rand mehrere Krallen 5.1 auf. In anderen Worten ist das Fixierelement 5 als Krallenring ausgebildet. Die Krallen 5.1 sind um eine Durchführöffnung des Fixierelements 5 angeordnet. Der Durchmesser der Durchführöffnung ist kleiner als der Außendurchmesser des rohrförmigen Elements 2, so dass die Krallen 5.1 beim Einschieben des rohrförmigen Elements 2 in Einführrichtung verformt werden und nach Erreichen einer finalen Einschubposition in die Wandung des rohrförmigen Elements 2 eingreifen. Dadurch bewirkt das Fixierelement 5, dass sich das rohrförmige Element 2 nicht in unerwünschter Weise aus dem Steckeinsatz 1 herauslösen kann.

Der Steckeinsatz 1 weist ein Löseorgan 6 auf. Das Löseorgan 6 weist ein erstes freies Ende 6.1 auf, das dazu ausgebildet ist, das Eingreifen der Krallen 5.1 des Fixierelements 5 in das rohrförmige Element 2 zu lösen, so dass das rohrförmige Element 2 wieder aus dem Steckeinsatz 1 herausgezogen werden kann. Das Löseorgan 6 ist vorzugsweise hülsenförmig ausgebildet und weist im Inneren einen Durchführkanal auf, durch den das rohrförmige Element 2 hindurchschiebbar ist.

Das Löseorgan 6 ist über die Einführöffnung E in die Steckhülse 4 eingeschoben. Das in der Steckhülse 4 liegende freie Ende 6.1 des Löseorgans 6 ist zum Zusammenwirken mit den Krallen 5.1 des Fixierelements 5 ausgebildet, und zwar derart, dass das freie Ende 6.1 des Löseorgans 6 bei dem axialen Einschieben des Löseorgans 6 die Krallen 5.1 in Einschieberichtung nach unten drückt und dadurch das Eingreifen der Krallen 5.1 in die Wandung des rohrförmigen Elements 2 aufgehoben wird.

Die Steckhülse 4 weist einen ersten Hülsenabschnitt 4.1 und einen zweiten Hülsenabschnitt 4.2 auf. Der erste und der zweite Hülsenabschnitt 4.1, 4.2 sind Bestandteil einer einstückig ausgebildeten Steckhülse 4. Der erste Hülsenabschnitt 4.1 ist vorzugsweise umfangsseitig geschlossen ausgebildet.

Der erste Hülsenabschnitt 4.1 weist zumindest bereichsweise einen Außendurchmesser auf, der an den Durchmesser der Öffnung im Grundkörper 3 angepasst ist, so dass die Steckhülse 4 passgenau in den Grundkörper 3 einsetzbar ist.

Im Ausführungsbeispiel der Fig. 1 bis 3 weist der erste Hülsenabschnitt 4.1 einen oberseitigen Rand 4.1.1 auf, der außerhalb des Grundkörpers 3 liegt, wenn der Steckeinsatz 4 in den Grundkörper 3 eingesetzt ist.

An den oberseitigen Rand 4.1.1 schließt sich ein erster Hülsenabschnittsbereich 4.1.2 an, auf den in Einschubrichtung des rohrförmigen Elements 2 ein zweiter Hülsenabschnittsbereich 4.1.3 anschließt. Der erste Hülsenabschnittsbereich 4.1.2 weist eine größere Wandstärke auf als der zweite Hülsenabschnittsbereich 4.1.3.

Der erste Hülsenabschnitt 4.1 weist außenseitig eine erste Stufung auf. Diese erste Stufung ist vorzugsweise zwischen dem ersten und zweiten Hülsenabschnittsbereich 4.1.2, 4.1.3 vorgesehen. Diese Stufung bildet einen Anschlag, der das Einschieben der Steckhülse 4 - und damit des gesamten Steckeinsatzes - in den Grundkörper 3 begrenzt. Weiterhin weist der erste Hülsenabschnitt 4.1 eine zweite Stufung auf. Diese zweite Stufung ist vorzugsweise ebenfalls zwischen dem ersten und zweiten Hülsenabschnittsbereich 4.1.2, 4.1.3 vorgesehen. Vorzugsweise sind die erste und zweite Stufung zumindest in etwa höhengleich angeordnet. Die zweite Stufung bildet eine Hinterschneidung, so dass eine Rastnase des Löseorgans 6 diese Hinterschneidung hintergreifen kann (wie in Fig. 1 und 2 ersichtlich). Damit kann das Löseorgans 6 verschiebbar und unverlierbar in der Steckhülse 4 gehalten werden.

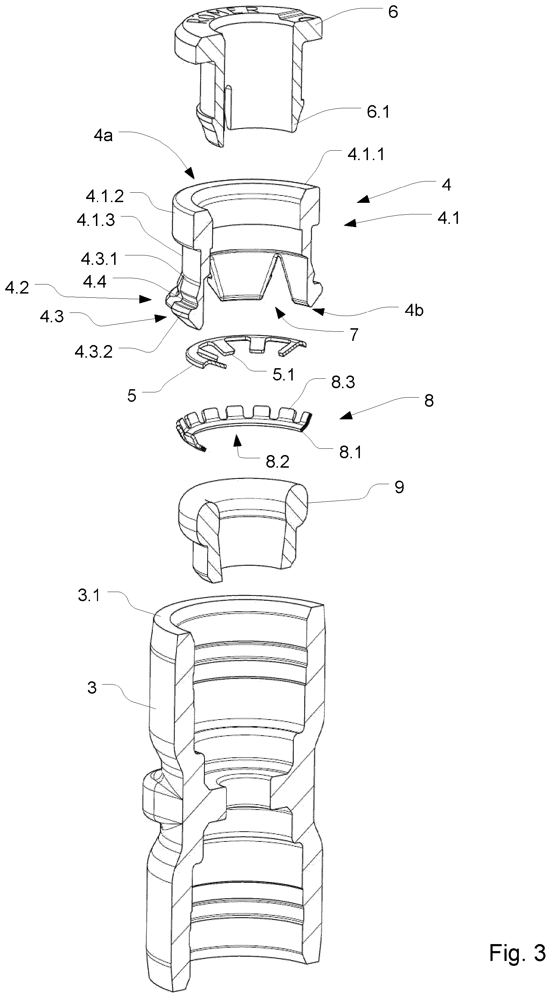

Der zweite Hülsenabschnitt 4.2 schließt in Einschubrichtung des rohrförmigen Elements 2 unmittelbar an den ersten Hülsenabschnitt 4.1 an. Der zweite Hülsenabschnitt 4.2 weist eine Vielzahl von Haltesementen 4.3 auf, die umfangsseitig verteilt angeordnet sind. Die Haltesemente 4.3 sind jeweils über eine Gelenkstelle 4.3.1 mit dem ersten Hülsenabschnitt 4.1 verbunden. Zudem ist jeweils zwischen zwei unmittelbar aufeinanderfolgenden Haltesementen 4.3 eine Lücke 4.5 vorgesehen. Die Lücke kann keilförmig ausgebildet sein. Dadurch können die Haltesemente 4.3 von einer aufgeweiteten Stellung, wie sie in Fig. 3 gezeigt ist, in eine Schwenkstellung radial nach innen in eine geschlossene Stellung positioniert werden. Wenn die Haltesegmente 4.3 in die geschlossene Stellung gebracht wurden, bilden diese im zweiten Hülsenabschnitt 4.2 eine vorzugsweise konisch zulaufende Führungsfläche 4.6 für das rohrförmige Element 2.

Vorzugsweise weisen zumindest einige Haltesegmente 4.3 im Bereich des freien Endes eine Verdickung 4.3.2 auf. Zwischen der Verdickung 4.3.2 und der Gelenkstelle 4.3.1 weisen zumindest einige Haltesegmente 4.3 eine Einkerbung 4.4 auf. In dieser Einkerbung 4.4 kann ein Sicherungselement 8 in Eingriff kommen, um die Haltesegmente 4.3 in der geschlossenen Stellung zu halten.

An den freien Enden der Haltesegmente 4.3 ist eine Anlagefläche 4.3.3 für das Dichtelement 9 gebildet. Die Anlagefläche 4.3.3 kann als ebene Fläche ausgebildet sein. In der geschlossenen Stellung der Haltesegmente 4.3 kommen die Anlageflächen 4.3.3 der Haltesegmente 4.3 in einer gemeinsamen Ebene zu liegen, die senkrecht zur Längsachse LA des Steckeinsatzes 1 verläuft. Damit kann durch die Haltesegmente 4.3 eine gleichmäßige Anlage für das Dichtelement 9 gebildet werden.

Die Steckhülse 4 ist vorzugsweise ein einstückiges KunststoffSpritzgussteil. Insbesondere sind auch die Gelenkstellen 4.3.1, mittels denen die Haltesegmente 4.3 verschwenkbar am ersten Hülsenabschnitt 4.1 gehalten sind, aus Kunststoff gebildet.

Wie in den Fig. 1 und 2 zu erkennen, ist im Inneren der Steckhülse 4 eine Aufnahme für das Fixierelement 5 gebildet. Das Fixierelement 5 kann bei geöffneter Stellung der Haltesegmente 4.3 das Fixierelement 5 von unten her, d.h. entgegen der Einschubrichtung des rohrförmigen Elements 2 in die Steckhülse 4 eingesetzt werden.

Im Innenraum der Steckhülse 4 ist eine Stufung 4.8 ausgebildet. Die Stufung 4.8 ist vorzugsweise auf Höhe der Gelenkstellen 4.3.1, d.h. im Übergangsbereich zwischen dem ersten und zweiten Hülsenabschnitt 4.1, 4.2 vorgesehen. Die Stufung 4.8 ist derart vorgesehen, dass der Innendurchmesser im Bereich der Gelenkstellen 4.3.1 größer ist als in dem oberhalb der Gelenkstellen 4.3.1 anschließenden Bereich des ersten Hülsenabschnitts 4.1. Das Fixierelement 5 weist außenumfangsseitig einen Außendurchmesser auf, der größer ist als der Innendurchmesser des ersten Hülsenabschnitts 4.1. Damit bildet die Stufung 4.8 eine Anlagefläche für den Rand des Fixierelements 5, so dass dieses Fixierelement 5 an einer definierten Position in der Steckhülse 4 zu liegen kommt. Wenn die Haltesegmente 4.3 in die geschlossene Position gebracht werden, wird der Innendurchmesser des zweiten Hülsenabschnitts 4.2 reduziert und das Fixierelement 5 formschlüssig in der Steckhülse 4 gehalten.

Das Sicherungselement 8 ist ein ringförmiges oder ringartiges Element, das eine Innenöffnung 8.2 mit einem Innendurchmesser aufweist, der an den Außendurchmesser der Haltesegmente 4.3 im geschlossenen Zustand angepasst ist. Das Sicherungselement 8 lässt sich insbesondere im geschlossenen Zustand der Haltesegmente 4.3 entgegen der Einschubrichtung des rohrförmigen Elements 2 auf den des zweiten Hülsenabschnitts 4.2 aufpressen. Dadurch kommt der innere Rand 8.1 des Sicherungselements 8 im Bereich der Einkerbungen 4.4 der Haltesegmente 4.3 zu liegen. Dadurch umgreift das Sicherungselement 8 außenseitig die Haltesegmente 4.3 und hält diese in der geschlossenen, nach innen verschwenkten Stellung.

In der Ausführungsform der Fig. 1 bis 3 ist das Sicherungselement 8 als Krallenring ausgebildet. Durch diesen Krallenring kann neben der Sicherung der Haltesegmente 4.3 in der geschlossenen Stellung zudem der Steckeinsatz 1 im Grundkörper 3 verankert werden. Der Krallenring kann beispielsweise durch Stanzen und Biegen aus einem metallischen Flachmaterial hergestellt sein.

Das als Krallenring ausgebildete Sicherungselement 8 weist eine Vielzahl von Krallen 8.3 auf. Die Krallen 8.3 werden beispielsweise durch zungenartige Flachmaterialabschnitte gebildet. Nach dem Einschieben oder Einpressen des Steckeinsatzes 1 in den Grundkörper 3 verspreizen sich die Krallen 8.3 mit der Wandung des Grundkörpers 3, so dass der Steckeinsatz 1 nicht mehr zerstörungsfrei aus dem Grundkörper 3 herausgelöst werden kann. Die Krallen 8.3 stehen vorzugsweise schräg nach außen von der Steckhülse 4 ab, d.h. die freien Enden der Krallen 8.3 zeigen nach oben in Richtung des Randes 4.1.1 der Steckhülse 4. Dadurch wird die Sicherungswirkung des Sicherungselements 8 verstärkt. Vorzugsweise ist der Krallenring gewölbt ausgebildet, und zwar derart, dass ein Ringbereich, der den inneren Rand 8.1 bildet, senkrecht oder im Wesentlichen senkrecht zur Längsachse des Steckeinsatzes 1 verläuft und die Krallen 8.3 von diesem Ringbereich schräg nach oben abstehen.

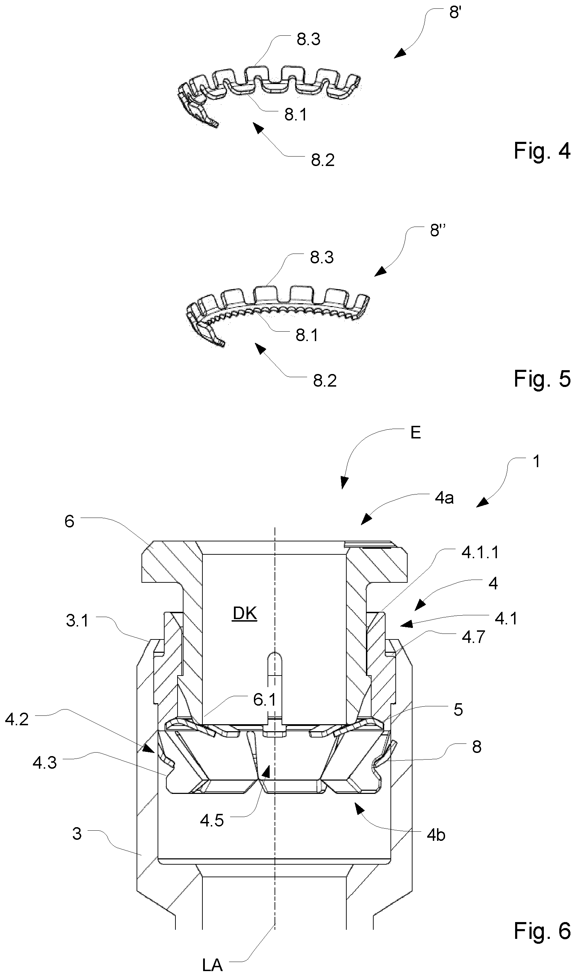

Fig. 4 zeigt eine erste alternative Ausführungsform eines Sicherungselements 8'. Das Sicherungselement 8' weist keinen durchgehenden Ringbereich auf, der den inneren Rand 8.1 bildet, sondern das ringförmige Sicherungselement 8' ist aus einem mäanderförmig gestanzten Flachmaterial gebildet. Dadurch weist das Sicherungselement 8' keinen durchgängigen inneren Rand 8.1 auf, sondern der innere Rand 8.1 ist segmentiert ausgebildet und umfasst mehrere durch Zwischenräume voneinander getrennte, bogenförmig ausgebildete Sicherungselementabschnitte. Insbesondere weist das Sicherungselement 8' eine wellenartige Form auf, wobei die Krallen 8.3 durch die radial außenliegenden Wellenberge und der innere Rand 8.1 durch die radial innenliegenden Wellentäler gebildet wird. Diese Form des Sicherungselements 8' hat den Vorteil, dass sich dieses beim Aufpressen auf die Haltesegmente 4.3 des zweiten Hülsenabschnitts aufgrund der Wellenform radial elastisch aufweiten lässt und sich nach dem Aufpressen wieder zumindest im Wesentlichen in die ursprüngliche Form und Größe zurückverformt. Dadurch kann ein verbesserter Halt des Sicherungselements 8' auf der Steckhülse 4 erreicht werden.

Fig. 5 zeigt eine zweite alternative Ausführungsform eines Sicherungselements 8". Das Sicherungselement 8" weist einen durchgehenden Ringbereich mit einem sägezahnartig strukturierten inneren Rand 8.1 auf. Diese Ausführung bietet den Vorteil, dass die am inneren Rand 8.1 vorgesehenen Spitzen oder Vorsprünge in die aus Kunststoff gebildete Wandung der Steckhülse 4 eindringen können. Dadurch ergibt sich eine sichere Verbindung zwischen dem Sicherungselement 8" und der Steckhülse 4. Es versteht sich, dass auch Kombinationen von technischen Merkmalen der vorstehend beschriebenen Sicherungselemente 8, 8', 8" möglich sind.

Fig. 6 zeigt eine alternative Ausführung des Steckeinsatzes 1. Nachfolgend werden lediglich die Unterschiede dieser Ausführungsform im Vergleich zur Ausführung gemäß den Figuren 1 bis 3 beschrieben. Im Übrigen gelten die vorherigen Ausführungen auch für die Ausführungsform gemäß Fig. 6.

Der Steckeinsatz 1 weist eine Steckhülse 4 auf, an der außenseitig eine Schulter 4.7 gebildet ist. Die Schulter 4.7 ist außenumfangsseitig am ersten Hülsenabschnitt 4.1 gebildet. Die Schulter 4.7 wird dadurch gebildet, dass die Wandstärke des ersten Hülsenabschnitts 4.1 im Bereich des Randes 4.1.1 der Steckhülse 4 reduziert ist. Die Schulter 4.7 kann durch eine sprunghafte Wandstärkenreduktion oder durch eine außenseitige konische Fläche des ersten Hülsenabschnitts 4.1 gebildet werden. Dieser Steckeinsatz 1 ist vorteilhafterweise zum Einsatz in einem metallischen Grundkörper 3 geeignet. Der Steckeinsatz 1 kann durch Umformen des Randes des Grundkörpers 3 derart, dass der freiendseitige Materialbereich des Grundkörpers 3 die Schulter 4.7 übergreift, im Grundkörper fixiert werden.

Zusätzlich kann die Sicherung des Steckeinsatzes 1 im Grundkörper durch ein als Krallenring ausgebildetes Sicherungselement 8 unterstützt werden.

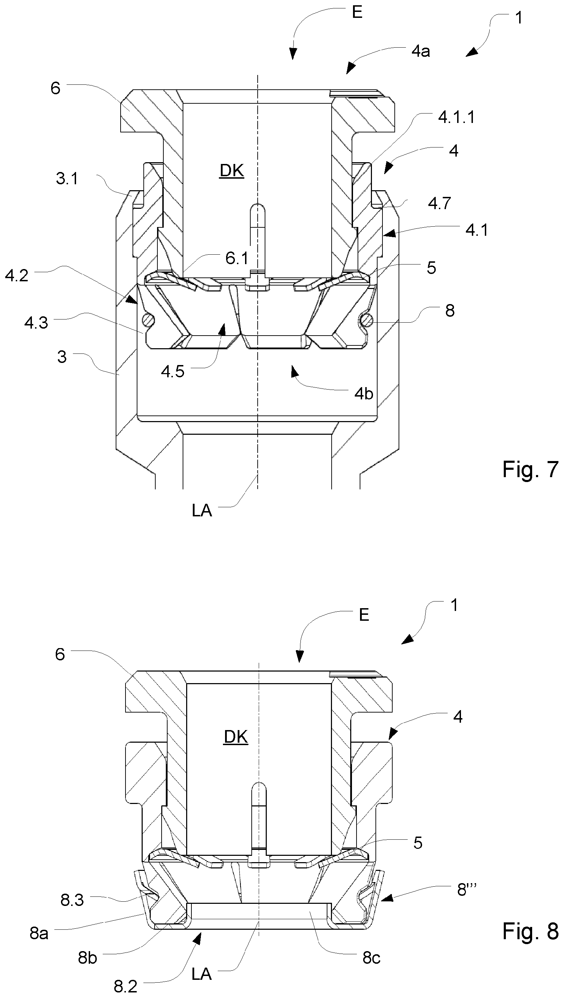

Alternativ kann, wie in Fig. 7 gezeigt, das Sicherungselement 8 nicht zum Zusammenwirken mit der Wandung des Grundkörpers 3 ausgebildet sein. Insbesondere kann das Sicherungselement 8 krallenlos ausgebildet sein, beispielsweise als Ring mit einem runden oder polygonen Querschnitt.

Fig. 8 zeigt eine weitere alternative Ausführung des Steckeinsatzes 1. Nachfolgend werden lediglich die Unterschiede dieser Ausführungsform im Vergleich zu den Ausführungsformen gemäß den Figuren 1 bis 3 und Figuren 6 bis 7 beschrieben. Im Übrigen gelten die vorherigen Ausführungen auch für die Ausführungsform gemäß Fig. 8.

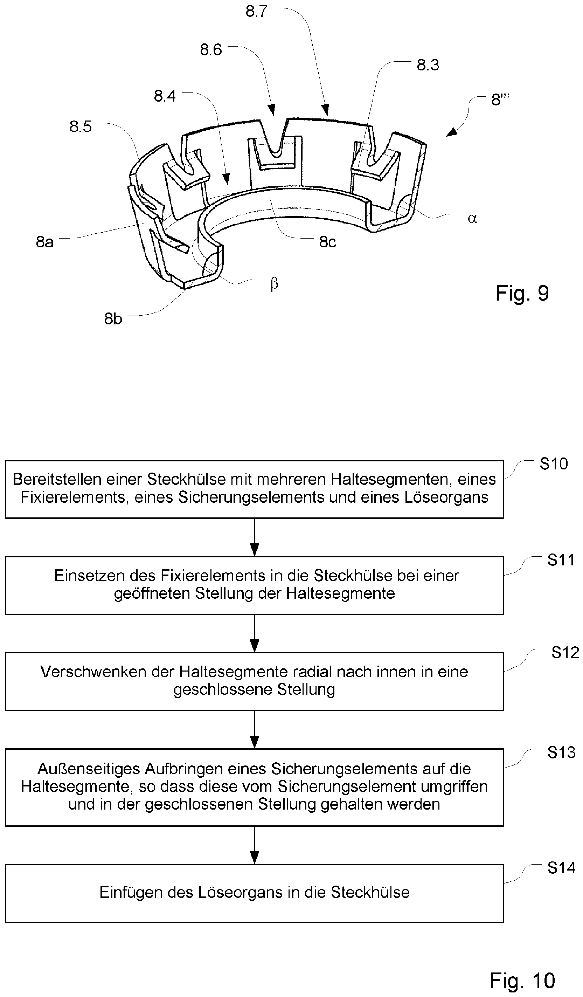

Der wesentliche Unterschied des Steckeinsatzes 1 gemäß Fig. 8 in Bezug auf die vorher beschriebenen Ausführungsformen von Steckeinsätzen besteht in der Ausbildung des Sicherungselements 8‴. Im Gegensatz zu den vorbeschriebenen Sicherungselementen 8, 8', 8", die lediglich außenseitig an dem zweiten Hülsenabschnitt 4.2, insbesondere den Haltesegmenten 4.3, angreifen, ist das Sicherungselements 8‴ dazu ausgebildet, den freiendseitigen Rand des zweiten Hülsenabschnitts 4.2, insbesondere den freiendseitigen Rand der Haltesegmente 4.3 zu umgreifen. Dazu ist das Sicherungselement 8‴ als Stützkorb ausgebildet. Fig. 9 zeigt das in Fig. 8 verwendete Sicherungselement 8‴ in Alleinstellung.

Das Sicherungselement 8‴ weist einen ersten Abschnitt 8a, einen zweiten Abschnitt 8b und einen dritten Abschnitt 8c auf. Diese Abschnitte 8a bis 8c schließen aufeinanderfolgend aneinander an, und zwar derart, dass der zweite Abschnitt 8b an den ersten Abschnitt 8a anschließt und mit diesem einen Winkel α einschließt. Der dritte Abschnitt 8c schließt an den zweiten Abschnitt 8b an und steht in einem Winkel β von diesem ab, und zwar in die gleiche Richtung wie der erste Abschnitt 8a. Dadurch ergibt sich eine wannenartige Form des Sicherungselements 8‴ mit einem ringförmigen Innenbereich 8.4. Dieser Innenbereich 8.4 ist dazu ausgebildet, die freien Enden der Haltesegmente 4.3 aufzunehmen, wenn sich diese in der geschlossenen, nach innen verschwenkten Stellung befinden. Das Sicherungselement 8‴ weist eine Innenöffnung 8.2 auf, die durch den dritten Abschnitt 8c des Sicherungselements 8‴ begrenzt wird.

An dem ersten Abschnitt 8a des Sicherungselements 8‴ sind Krallen 8.3 vorgesehen, die radial nach innen in den Innenbereich 8.4 hineinragen. Diese Krallen 8.3 greifen dann, wenn das Sicherungselement 8‴ auf die Haltesegmente 4.3 aufgesteckt ist, in die Einkerbungen 4.4 der Haltesegmente 4.3 ein. Dadurch wird eine sichere Fixierung des Sicherungselements 8‴ an den Haltesegmenten 4.3 und damit an dem freie Ende des zweiten Hülsenabschnitts 4.2 der Steckhülse 4 erreicht.

Der erste Abschnitt 8a des Sicherungselements 8‴ weist einen freiendseitigen Rand 8.5 auf, mittels dem das Sicherungselement 8‴ in dem Grundkörper 3 fixiert wird. Der Rand 8.5 ist vorzugsweise segmentiert ausgebildet. Diese Segmentierung wird durch umfangsseitig verteilt angeordnete Schlitze 8.6 erreicht. Durch die Schlitze 8.6 werden randseitige Fixierbereiche 8.7 geschaffen, mittels denen das Sicherungselement 8‴ und damit der gesamte Steckeinsatz 1 im Grundkörper 3 gehalten wird.

Das Sicherungselement 8‴ bietet folgende Vorteile:
Zunächst wird durch das randseitige Umgreifen der Haltesegmente 4.3 eine höhere Formstabilität der Haltesegmente 4.3 bei Durchbelastung des Steckeinsatzes 1 erreicht. Zudem bildet der zweite Abschnitt 8b des Sicherungselements 8‴ eine Anlagefläche für das unterhalb des Steckeinsatzes 1 angeordnetes Dichtelement 9. Ein auf das Dichtelement 9 wirkender Druck wird dadurch direkt auf das Sicherungselement 8‴ übertragen und wirkt nicht auf die Haltesegmente 4.3 der Steckhülse 4.

Fig. 10 zeigt ein Blockdiagramm, mittels dem nachfolgend das Verfahren zur Herstellung des Steckeinsatzes näher erläutert wird.

Zunächst werden eine Steckhülse 4, ein Fixierelement 5, ein Sicherungselement 8 und ein Löseorgan 6 als voneinander separierte Bauteile des Steckeinsatzes 1 bereitgestellt (S10). Die Steckhülse 4 ist gemäß den vorherigen Ausführungen ausgebildet und weist einen ersten und einen zweiten Hülsenabschnitt 4.1, 4.2 auf. Der erste Hülsenabschnitt 4.1 ist zur Aufnahme des ersten freien Endes 6.1 des Löseorgans 6 ausgebildet. Der zweite Hülsenabschnitt 4.2 umfasst mehrere umfangsseitig verteilt angeordnete Haltesegmente 4.3, die radial in Bezug auf die Längsachse LA verschwenkbar sind. Die Verschwenkbarkeit der Haltesegmente 4.3 wird durch verformbare Materialabschnitte der Steckhülse 4 erreicht, die Gelenkstellen 4.3.1 bilden, über die die Haltesegmente 4.3 an den ersten Hülsenabschnitt 4.1 gelenkig angebunden sind. Insbesondere können die Haltesegmente 4.3 von einer geöffneten Stellung, in der durch die Haltesegmente 4.3 eine Öffnung mit einem ersten Durchmesser begrenzt wird, in eine geschlossene Stellung gebracht werden, in der die Öffnung einen zweiten Durchmesser aufweist, der kleiner ist als der erste Durchmesser.

In der geöffneten Stellung der Haltesegmente 4.3 wird das Fixierelement 5 in die Steckhülse 4 eingesetzt, so dass das Fixierelement 5 in einem Innenraum der Steckhülse 4 aufgenommen ist (S11). Das Einbringen des Fixierelements 5 in die Steckhülse 4 erfolgt vorzugsweise in einer Ausrichtung der Steckhülse 4 derart, dass die Längsachse LA der Steckhülse 4 vertikal oder im Wesentlichen vertikal verläuft und der zweite Hülsenabschnitt 4.2 oberhalb des ersten Hülsenabschnitts 4.1 angeordnet ist. In anderen Worten zeigen damit die Haltesegmente 4.3 nach oben, so dass das Fixierelement 5 schwerkraftbedingt in die Innenöffnung fällt. Das Fixierelement 5 liegt dabei an der Stufung 4.8 der Steckhülse 4 an. Dadurch kommt das Fixierelement 5 in einer Ebene zu liegen, die senkrecht zur Längsachse LA der Steckhülse 4 verläuft.

Nach dem Einsetzen des Fixierelements 5 werden die Haltesegmente 4.3 radial nach innen verschwenkt, so dass diese eine geschlossene Stellung einnehmen (S12). Dieses Verschwenken erfolgt vorzugsweise mittels eines Presswerkzeugs, das eine konisch geformte Innenfläche aufweist. Dieses Presswerkzeug wird axial, d.h. entlang der Längsachse LA der Steckhülse 4 auf die Haltesegmente 4.3 zubewegt. Das Presswerkzeug wirkt mit der konisch geformten Innenfläche auf die freien Enden der Haltesegmente 4.3 und drückt diese radial nach innen in die geschlossene Stellung.

Um diese geschlossene Stellung zu sichern, wird außenseitig oder freiendseitig ein Sicherungselement 8 auf die Haltesegmente 4.3 aufgebracht. Nach dem Aufbringen des Sicherungselements 8 werden die Haltesegmente 4.3 von dem Sicherungselement 8 umgriffen und in der geschlossenen Stellung gehalten (S13).

Vorzugsweise wird das Sicherungselement 8 durch das Presswerkzeug aufgebracht. Das Presswerkzeug kann dabei dazu ausgebildet sein, nach dem Verschwenken der Haltesegmente 4.3 in die geschlossene Stellung das Sicherungselement 8 auf die Haltesegmente 4.3 aufzudrücken.

Zuletzt erfolgt das Einfügen des Löseorgans 6 in die Steckhülse 4 (S14).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Steckeinsatz
- 2: rohrförmiges Element
- 3: Grundkörper
- 3.1: Randbereich
- 4: Steckhülse
- 4a: erstes freies Ende
- 4b: zweites freies Ende
- 4.1: erster Hülsenabschnitt
- 4.1.1: Rand
- 4.1.2: erster Hülsenabschnittsbereich
- 4.1.3: zweiter Hülsenabschnittsbereich
- 4.2: zweiter Hülsenabschnitt
- 4.3: Haltesegment
- 4.3.1: Gelenkstelle
- 4.3.2: Verdickung
- 4.3.3: Anlagefläche
- 4.4: Einkerbung
- 4.5: Führungsfläche
- 4.7: Schulter
- 4.8: Stufung
- 5: Fixierelement
- 5.1: Kralle
- 6: Löseorgan
- 6.1: erstes freies Ende
- 7: Einschuböffnung
- 8, 8', 8", 8‴: Sicherungselement
- 8.1: innerer Rand
- 8.2: Innenöffnung
- 8.3: Krallen
- 9: Dichtelement

- DK: Durchführkanal
- E: Einführöffnung
- LA: Längsachse

## Patentansprüche

1. Steckeinsatz ausgebildet zur Einbringung in einen Grundkörper (3), wobei der Steckeinsatz (1) zur lösbaren Kopplung eines rohrförmigen Elements (2) mit dem Grundkörper (3) ausgebildet ist, wobei der Steckeinsatz (1) eine Steckhülse (4), ein Fixierelement (5) und ein Löseorgan (6) umfasst, wobei das Fixierelement (5) zur lösbaren Fixierung eines über eine Einführöffnung (E) entlang der Längsachse (LA) des Steckeinsatzes (1) eingeschobenen, rohrförmigen Elements (2) in der Steckhülse (4) ausgebildet ist und das Löseorgan (6) mit dem Fixierelement (5) derart zusammenwirkt, dass durch eine axiale Verschiebung des Löseorgans (6) relativ zur Steckhülse (4) die Fixierung des rohrförmigen Elements (2) gelöst wird, wobei die Steckhülse (4) einen ersten und einen zweiten Hülsenabschnitt (4.1, 4.2) umfasst, wobei der erste Hülsenabschnitt (4.1) zur Aufnahme eines ersten freien Endes (6.1) des Löseorgans (6) ausgebildet ist, wobei der zweite Hülsenabschnitt (4.2) mehrere umfangsseitig verteilt angeordnete Haltesegmente (4.3) umfasst, die radial in Bezug auf die Längsachse (LA) verschwenkbar sind, wobei die Haltesegmente (4.3) in einer geöffneten Stellung eine Einschuböffnung (7) für das Fixierelement (5) freigeben, so dass das Fixierelement (5) von der der Einführöffnung (E) gegenüberliegenden Einschuböffnung (7) in die Steckhülse (4) einsetzbar ist, wobei die Haltesegmente (4.3) durch ein Verschwenken radial nach innen in eine geschlossene Stellung positionierbar sind, so dass das Fixierelement (5) in der Steckhülse (4) fixiert ist und dass ein Sicherungselement (8) vorgesehen ist, das die in die geschlossene Stellung verschwenkten Haltesegmente (4.3) umfangsseitig umgibt und dadurch diese geschlossene Stellung sichert.

2. Steckeinsatz nach Anspruch 1, **dadurch gekennzeichnet, dass** zumindest einige der Haltesegmente (4.3) außenseitig eine Einkerbung (4.4) oder eine Hinterschneidung aufweisen, in die das Sicherungselement (8) mit dessen inneren Rand (8.1) oder Krallen eingreift.

3. Steckeinsatz nach Anspruch 1 oder 2, **dadurch gekennzeichnet, dass** jeweils ein Paar von unmittelbar benachbarten Haltesegmenten (4.3) der Steckhülse (4) in der geöffneten Stellung durch jeweils eine Lücke (4.5) getrennt sind, wobei diese Lücke (4.5) in der geschlossenen Stellung der Haltesegmente (4.3) zumindest partiell geschlossen ist.

4. Steckeinsatz nach einem der vorhergehenden Ansprüche, **dadurch gekennzeichnet, dass** die Haltesegmente (4.3) in der geschlossenen Stellung innenseitig eine trichterförmige Führungsfläche (4.6) für das rohrförmige Element (2) bilden.

5. Steckeinsatz nach einem der vorhergehenden Ansprüche, **dadurch gekennzeichnet, dass** das Sicherungselement (8) ein ringartiges Element mit einer Innenöffnung (8.2) ist, wobei die Innenöffnung (8.2) derart dimensioniert ist, dass das Sicherungselement (8) auf die sich in der geschlossenen Stellung befindlichen Haltesegmente (4.3) aufpressbar ist und das Sicherungselement (8) mit dessen inneren Rand (8.1) oder Krallen in eine umlaufend ausgebildete Nut eingreift, die durch das Aneinanderfügen der Einkerbungen (4.4) oder Hinterschneidungen der Haltesegmente (4.3) gebildet wird.

6. Steckeinsatz nach einem der vorhergehenden Ansprüche, **dadurch gekennzeichnet, dass** das Sicherungselement (8) außenumfangsseitig ausgebildete Krallen (8.3) aufweist, die zur Verankerung des Steckeinsatzes (1) in dem Grundkörper (3) ausgebildet sind.

7. Steckeinsatz nach Anspruch 6, **dadurch gekennzeichnet, dass** die Krallen (8.3) schräg nach außen und nach oben in Richtung des freiendseitigen Randes (4.1.1) des ersten Hülsenabschnitts (4.1) der Steckhülse (4) abstehen.

8. Steckeinsatz nach einem der vorhergehenden Ansprüche, **dadurch gekennzeichnet, dass** das Sicherungselement (8) eine sich innenseitig verjüngende Form aufweist, und zwar derart, dass sich der Innendurchmesser des Sicherungselements (8) vom äußeren Rand zum inneren Rand (8.1) hin reduziert.

9. Steckeinsatz nach einem der Ansprüche 1 bis 5, **dadurch gekennzeichnet, dass** das Sicherungselement (8‴) dazu ausgebildet ist, den freiendseitigen Rand der Haltesegmente (4.3) zu umgreifen.

10. Steckeinsatz nach Anspruch 9, **dadurch gekennzeichnet, dass** das Sicherungselement (8‴) mit seinem den freiendseitigen Rand der Haltesegmente (4.3) umgreifenden Bereich einen Anlageabschnitt für ein Dichtelement (9) bildet.

11. Steckeinsatz nach einem der vorhergehenden Ansprüche, **dadurch gekennzeichnet, dass** das Fixierelement (5) bei geschlossener Stellung der Halteelemente (4.3) formschlüssig in der Steckhülse (4) fixiert ist.

12. Steckeinsatz nach einem der vorhergehenden Ansprüche, **dadurch gekennzeichnet, dass** das Fixierelement (5) ein scheibenförmiger Krallenring ist, der innenumfangsseitig eine Vielzahl von reversibel verbiegbaren Krallen (5.1) zur Fixierung des rohrförmigen Elements (2) aufweist.

13. Steckeinsatz nach einem der vorhergehenden Ansprüche, **dadurch gekennzeichnet, dass** die Steckhülse (4) ein einstückiges Kunststoffspritzgussteil ist.

14. Steckeinsatz nach einem der vorhergehenden Ansprüche, **dadurch gekennzeichnet, dass** die Steckhülse (4) im Bereich des freiendseitig vorgesehenen Randes (4.1.1) des ersten Hülsenabschnitts (4.1) eine Schulter (4.7) aufweist, die dazu ausgebildet ist, durch Umformen eines Randbereichs (3.1) des Grundkörpers (3) im Grundkörper (3) übergriffen zu werden.

15. Verfahren zur Herstellung eines Steckeinsatzes (1), der zur lösbaren Kopplung eines rohrförmigen Elements (2) mit einem Grundkörper (3) ausgebildet ist, wobei der Steckeinsatz (1) eine Steckhülse (4), ein Fixierelement (5) und ein Löseorgan (6) umfasst, wobei das Fixierelement (5) zur lösbaren Fixierung des rohrförmigen Elements (2) in der Steckhülse (4) ausgebildet ist und das Löseorgan (6) mit dem Fixierelement (5) derart zusammenwirkt, dass durch eine axiale Verschiebung des Löseorgans (6) relativ zur Steckhülse (4) die Fixierung des rohrförmigen Elements (2) im Steckeinsatz (1) gelöst wird, wobei das Verfahren die folgenden Schritte umfasst:
- Bereitstellen einer Steckhülse (4), eines Fixierelements (5), eines Sicherungselements (8) und eines Löseorgans (6), wobei die Steckhülse (4) einen ersten und einen zweiten Hülsenabschnitt (4.1, 4.2) aufweist, wobei der erste Hülsenabschnitt (4.1) zur Aufnahme des ersten freien Endes (6.1) des Löseorgans (6) ausgebildet ist, wobei der zweite Hülsenabschnitt (4.2) mehrere umfangsseitig verteilt angeordnete Haltesegmente (4.3) umfasst, die radial in Bezug auf eine Längsachse (LA) der Steckhülse (4) verschwenkbar sind (S10);
- in einer geöffneten Stellung der Haltesegmente (4.3), Einsetzen des Fixierelements (5) in die Steckhülse (4), so dass das Fixierelement (5) in einem Innenraum der Steckhülse (4) aufgenommen ist (S11);
- Verschwenken der Haltesegmente (4.3) radial nach innen, so dass diese eine geschlossene Stellung einnehmen (S12);
- Aufbringen eines Sicherungselements (8) auf die Haltesegmente (4.3), so dass diese vom Sicherungselement (8) umgriffen und in der geschlossenen Stellung gehalten werden (S13); und
- Einfügen des Löseorgans (6) in die Steckhülse (4) (S14).
